# FASCICULE DE BREVET EUROPEEN

(11) **EP 3 250 808 B1**
(45) Date de publication et mention de la délivrance du brevet: **05.06.2019**
(21) Numéro de dépôt: 16707852.6
(22) Date de dépôt: 29.01.2016
(51) Int. Cl.: F02K 9/60, F02K 9/56, F02K 9/50, F15B 1/08, F16L 55/054

(54) **SYSTÈME CORRECTEUR D'EFFET POGO CAPACITIF À TUBE DE REJET DEMI-CENTRÉ POSITIONNABLE DANS UN COUDE**
KAPAZITIVES SYSTEM ZUR KORREKTUR DES POGO-EFFEKTS MIT HALBZENTRIERTER ENTLADUNGSRÖHRE ZUR POSITIONIERUNG IN EINER KRÜMMUNG
CAPACITIVE SYSTEM FOR CORRECTING THE POGO EFFECT WITH SEMI-CENTRED DISCHARGE TUBE CAPABLE OF BEING POSITIONED IN A BEND

(30) Priorité: 30.01.2015 FR 1550747
(43) Date de publication de la demande: 06.12.2017
(73) Titulaire: ArianeGroup SAS, 75015 Paris (FR)
(72) Inventeur: VERPLANCKE, Cyril, Paul, Denis, 92600 Asnieres-sur-seine (FR); TRIGER, Mathieu, Henry, Raymond, 27200 Vernon (FR); HUMANES ASENSIO, Jesus Angel, 27200 Vernon (FR); PATTYN, Jean-Luc, Marcel, René, 27600 Gaillon (FR); MARTINEZ PEREZ, Ivan, 47140 Laguna de Duero Valladolid (ES)
(74) Mandataire: Intès, Didier Gérard André
(86) Numéro de dépôt international: PCT/FR2016/050187
(87) Numéro de publication internationale: WO 2016/120571

(56) Documents cités:
- FR-A1- 2 499 641
- FR-A1- 2 975 440
- US-A- 4 039 000
- LUKE SWANSON ET AL: "Design Analysis of the Ares I Pogo Accumulator", 45TH AIAA/ASME/SAE/ASEE JOINT PROPULSION CONFERENCE & EXHIBIT, 2 août 2009 (2009-08-02), XP055231760, Reston, Virigina DOI: 10.2514/6.2009-4950 ISBN: 978-1-60086-972-3

## Description

La présente invention concerne un système d'alimentation d'un moteur-fusée en propergol liquide comprenant un système correcteur d'effet POGO capacitif.

### Arrière-plan de l'invention

Dans le domaine des fusées à propergols liquides, on a donné le nom d'effet POGO à l'entrée en résonance d'un propergol liquide dans le circuit d'alimentation du moteur-fusée avec des oscillations mécaniques de la fusée. Comme la poussée du moteur-fusée varie avec le débit de propergol fourni par le circuit d'alimentation, une telle entrée en résonance peut causer des oscillations rapidement divergentes, et donc donner lieu à des difficultés de guidage, et même à des dommages pouvant aller jusqu'à la perte totale de la charge utile, voire du véhicule. Le nom d'effet POGO ne provient pas d'un acronyme, mais des « pogo sticks » ou échasses sauteuses, jouets formés par une tige à ressort dont les bonds ont rappelé aux techniciens les oscillations longitudinales violentes des fusées provoquées par cet effet. Depuis le début du développement des fusées à propergols liquides, il s'est donc révélé très important de prévoir des systèmes correcteurs d'effet POGO. Par « système correcteur d'effet POGO », on entend tout système apte à supprimer totalement les oscillations POGO ou à les limiter à une intensité suffisamment faible pour ne pas causer de difficultés de guidage ou de dommages du véhicule.

Parmi les systèmes correcteurs d'effet POGO, on connaît notamment les systèmes de type capacitif, divulgués par exemple dans le brevet français n° 2 975 440. Dans un tel système, le réservoir d'un accumulateur hydraulique est disposé autour de la conduite d'une ligne d'alimentation en propergol liquide du moteur-fusée (par exemple, la ligne d'alimentation en oxygène liquide (LOx)), et communique avec cette conduite d'alimentation via des orifices de communication pratiqués dans sa partie inférieure. Un débit constant de gaz (par exemple de l'hélium (He)) est injecté dans la partie supérieure du réservoir, de manière à entretenir une bulle de gaz dans le réservoir, et un tube plongeur relie l'interface liquide-gaz à la conduite d'alimentation en propergol liquide.

Dans les architectures de système correcteur capacitif connues, le réservoir est centré, c'est-à-dire qu'il est coaxial avec la conduite d'alimentation en propergol, et les orifices de communication sont répartis uniformément autour de la conduite d'alimentation en propergol.

Ces architectures connues présentent des inconvénients en termes d'encombrement. En effet, dans une fusée ou un autre véhicule spatial, il est souhaitable de limiter l'encombrement du système d'alimentation en propergol liquide comprenant le système correcteur, notamment dans l'intérêt des performances au décollage.

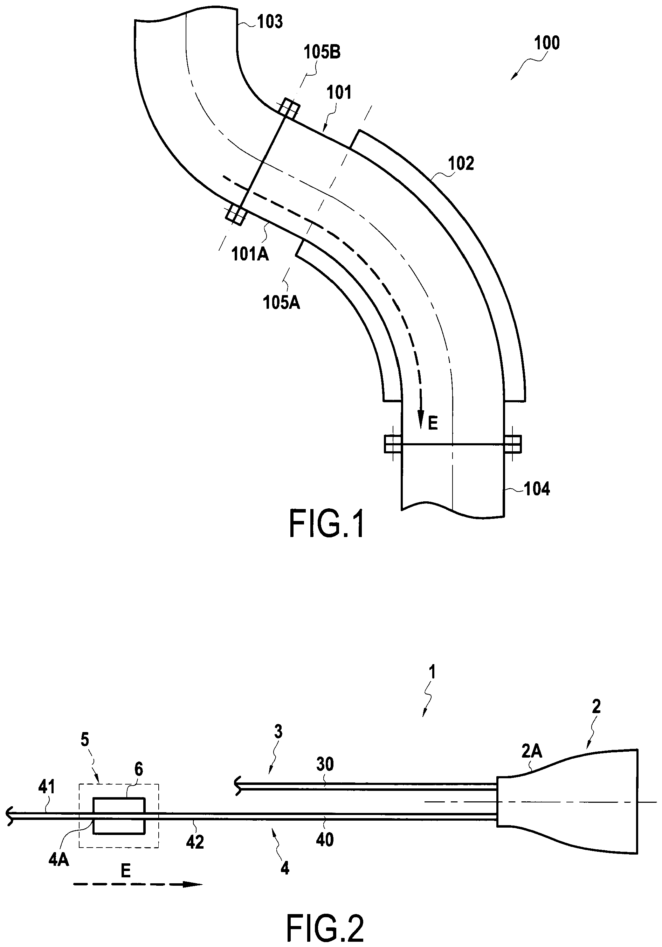

Pour cela, on a proposé de prévoir l'intégration du système correcteur capacitif dans un coude dans la conduite d'alimentation en propergol liquide. Cette intégration est décrite, par exemple, dans l'article « Design Analysis of the Ares I POGO Accumulator », Luke A. Swanson et al., 45th AIAA/ASME/SAE/ASEE Joint Propulsion Conférence & Exhibit, 2-5 août 2009, et représentée schématiquement sur la figure 1.

Le système correcteur capacitif connu 100 comprend une partie de conduite d'alimentation 101 et un accumulateur hydraulique comprenant un réservoir 102. La partie de conduite d'alimentation 101 est coudée, et est configurée pour être reliée en amont à une conduite amont d'alimentation en propergol liquide 103, et en aval à une conduite aval d'alimentation en propergol liquide 104. La direction E d'écoulement du propergol liquide est indiquée par une flèche sur la figure 1. Le réservoir 102 est centré autour de la partie de conduite d'alimentation 101. L'assemblage entre la partie de conduite d'alimentation 101 et la conduite amont d'alimentation 103 est réalisé à l'aide d'une bride et de vis.

Dans cette architecture, puisqu'il est nécessaire de conserver un certain espace pour le passage des vis, la bride ne peut pas être disposée immédiatement en amont du réservoir 102 (position 105A sur la figure 1). Au contraire, pour ménager l'espace nécessaire au passage des vis au moment de l'assemblage, il est indispensable de prévoir, dans la partie de conduite d'alimentation 101, un tronçon rectiligne 101A en amont du réservoir 102,et de placer la bride à l'extrémité amont de ce tronçon rectiligne (position 105B de la bride sur la figure 1). La présence du tronçon rectiligne 101A annule en partie le gain en encombrement réalisé en intégrant le système correcteur capacitif 100 dans un coude.

De plus, comme le réservoir 102 reste centré autour de la partie de conduite d'alimentation 101, de sorte que la bulle de gaz et les orifices de communication sont répartis uniformément autour de la conduite d'alimentation comme on l'a expliqué plus haut, le système correcteur capacitif 100 ne peut pas être utilisé dans un espace restreint (par exemple lorsque la hauteur disponible sous le coude est faible), ou sur un coude dont le rayon de courbure est faible.

De plus, dans la pratique, un tel système correcteur capacitif est entièrement soudé à la conduite d'alimentation, ce qui présente des inconvénients, notamment celui de n'être ni modulaire, ni démontable, et donc de ne pas permettre de changer facilement la configuration des orifices de communication si cela s'avère nécessaire.

### Objet et résumé de l'invention

La présente invention vise à proposer une architecture de système correcteur capacitif qui remédie au moins partiellement à ces inconvénients.

À cet effet, la présente invention propose un système correcteur d'effet POGO pour un système d'alimentation d'un moteur-fusée en propergol liquide, comprenant une partie de conduite d'alimentation en propergol liquide configurée pour être reliée en amont et en aval à une conduite d'alimentation en propergol liquide du système d'alimentation, et un accumulateur hydraulique, comprenant un réservoir relié à la partie de conduite d'alimentation par au moins un orifice de communication, caractérisé en ce que au moins une portion de la partie de conduite d'alimentation est entourée au moins partiellement par le volume intérieur du réservoir, chaque section transversale de ladite portion par rapport à son axe central étant entourée au moins partiellement par la section transversale correspondante du volume intérieur du réservoir, de sorte que la section transversale correspondante du volume intérieur du réservoir soit excentrée par rapport à ladite section transversale de ladite portion.

Puisque le volume intérieur du réservoir est excentré par rapport à la partie de conduite d'alimentation, on peut dégager un espace suffisant pour l'assemblage de la partie de la conduite d'alimentation avec la conduite d'alimentation située en amont et en aval du système correcteur. En particulier, il n'est pas nécessaire de prévoir, pour l'assemblage, un tronçon rectiligne de la conduite d'alimentation. Ceci permet de réduire l'encombrement global du système correcteur.

Selon une possibilité, la partie de conduite d'alimentation comprend une portion rectiligne s'étendant jusqu'à l'extrémité aval de la partie de conduite d'alimentation.

Selon une possibilité, le au moins un orifice de communication est aménagé dans la portion rectiligne de la partie de conduite d'alimentation.

Selon une possibilité, le réservoir comprend une portion linéaire entourant au moins partiellement la portion rectiligne de la partie de conduite d'alimentation, et présentant un axe longitudinal passant par le centre de chaque section transversale du volume intérieur de la portion linéaire.

Puisque, selon l'invention, chaque section transversale correspondante du réservoir est excentrée par rapport à la section transversale, l'axe longitudinal de la portion linéaire du réservoir est décalé par rapport à l'axe de la portion rectiligne de la partie de conduite d'alimentation. La portion linéaire du réservoir présente l'avantage d'être simple à réaliser.

Selon une possibilité, l'axe longitudinal de la portion linéaire du réservoir est parallèle à l'axe de la portion rectiligne de la partie de conduite d'alimentation.

Selon une possibilité, la partie de conduite d'alimentation est coudée dans une direction de coude, et l'axe longitudinal de la portion linéaire du réservoir est décalé par rapport à l'axe de la portion rectiligne de la conduite d'alimentation dans une direction opposée à la direction de coude.

Ainsi, on peut prévoir le système correcteur capacitif dans un coude de la conduite d'alimentation, comme dans certaines architectures connues. De plus, puisque le réservoir est décalé dans une direction opposée à la direction de coude, on ménage un espace suffisant pour l'assemblage de la portion coudée de la partie de conduite d'alimentation, notamment lorsque cet assemblage est effectué à l'aide d'une bride et de vis.

Selon une possibilité, le au moins un orifice de communication est aménagé sur le demi-périmètre de la partie de conduite d'alimentation situé du côté opposé à la direction de coude.

De cette manière, la distance entre le au moins un orifice de communication et la paroi interne du réservoir est maintenue suffisante pour assurer un comportement hydraulique satisfaisant du au moins un orifice de communication. Ceci assure un fonctionnement satisfaisant du système correcteur.

Selon une possibilité, le système correcteur d'effet POGO comprend une pièce coudée délimitant un volume de conduite et un volume de réservoir disjoints, une pièce de base fixée à la pièce coudée, et une pièce de communication, formant un manchon comprenant le au moins un orifice de communication dans sa paroi, et étant fixée à la pièce de base et à la pièce coudée de manière à être insérée dans un volume délimité par la pièce de base et la pièce coudée, la partie de conduite d'alimentation étant délimitée par les parois du volume de conduite et, dans sa portion rectiligne, par la pièce de communication, le réservoir étant délimité par les parois du volume de réservoir, de la pièce de communication, et de la pièce de base.

Cette configuration permet d'agencer le système correcteur capacitif autour de la ligne d'alimentation en propergol à l'aide de seulement trois pièces, ces pièces étant toutes réalisables par usinage. Ceci évite d'avoir à assembler le système à l'aide de soudures, et donc les inconvénients usuels associés à un assemblage à l'aide de soudures. D'autre part, le système est modulaire, et en particulier, on peut aisément changer l'agencement du au moins un orifice de communication, simplement en remplaçant la pièce de communication.

Selon une possibilité, la pièce de base et la pièce coudée sont configurées de manière à pouvoir être fixées l'une à l'autre à l'aide d'une bride circulaire.

On évite ainsi d'avoir recours à des brides non circulaires, plus complexes et coûteuses, pour réaliser l'assemblage. D'autre part, lorsque le propergol est de l'oxygène liquide ou plus généralement un propergol cryogénique, il est possible d'utiliser un joint cryogénique circulaire connu pour assurer l'étanchéité entre la pièce de base et la pièce coudée, au lieu d'un joint cryogénique non circulaire, qui est considérablement plus coûteux et nécessite un développement spécifique.

Selon une possibilité, la pièce de communication est formée d'une seule pièce venue de matière avec la pièce de base ou la pièce coudée.

Cette configuration est moins coûteuse et, puisque la pièce de communication est d'un seul tenant avec l'une des deux autres pièces, l'assemblage est également simplifié.

Selon une possibilité, la pièce de base, la pièce coudée et la pièce de communication sont réalisées d'un seul tenant par fabrication additive.

Ainsi, la paroi externe du réservoir peut avoir une forme extérieure quelconque et complexe, et donc adaptée au mieux à l'espace environnant. Ceci est désirable dans tout véhicule spatial comme un étage de lanceur spatial, où l'encombrement doit être réduit autant que possible.

Selon une possibilité, au moins une partie de l'élément de séparation de la pièce coudée séparant le volume de conduite et le volume de réservoir est d'épaisseur sensiblement constante.

De cette manière, l'élément de séparation suit la courbure de la partie de conduite d'alimentation, et le volume intérieur du réservoir est augmenté. Puisque le volume intérieur du réservoir est augmenté, le volume de gaz emprisonné dans le réservoir peut varier dans une plus grande plage de valeurs. Ainsi, la plage de fonctionnement du système correcteur POGO est augmentée.

Selon une possibilité, au moins une paroi de compartimentage parallèle à l'axe de la portion linéaire du réservoir est disposée dans le réservoir, de manière à compartimenter le réservoir en plusieurs sous-volumes, chaque sous-volume étant relié à la partie de conduite d'alimentation par au moins un orifice de communication.

La au moins une paroi de compartimentage peut s'étendre radialement à partir de la paroi de la partie de conduite d'alimentation ou s'étendre radialement à partir de la paroi du réservoir.

Pendant une phase du vol où le système subit une accélération latérale, en l'absence de telles parois de compartimentage, l'interface liquide-gaz peut atteindre au moins un des orifices de communication, ce qui conduit à un dysfonctionnement indésirable du système correcteur capacitif. La présence d'au moins une paroi de compartimentage permet, en compartimentant le réservoir en plusieurs sous-volumes de dimensions plus réduites que celles du réservoir entier, permet de limiter l'apparition d'une telle situation.

Selon une possibilité, un espace de communication fluide est prévu entre l'extrémité distale de la au moins une paroi de compartimentage et la paroi en regard du réservoir ou de la partie de conduite d'alimentation de manière à mettre les sous-volumes du réservoir en communication fluide. Des orifices de communication supplémentaires peuvent également être prévus dans la au moins une paroi de compartimentage de manière à mettre les sous-volumes du réservoir en communication fluide.

Les différents sous-volumes délimités par la au moins une paroi étant en communication fluide, on limite l'occurrence de dysfonctionnements du système correcteur lorsque celui-ci subit une accélération latérale.

### Brève description des dessins

L'invention sera bien comprise et ses avantages apparaîtront mieux, à la lecture de la description détaillée qui suit de plusieurs modes de réalisations, représentés à titre d'exemples non limitatifs. La description se réfère aux dessins annexés sur lesquels :
- la figure 1 est une représentation schématique d'un système correcteur d'effet POGO de l'art antérieur ;
- la figure 2 est une représentation schématique d'un véhicule spatial comprenant un système correcteur d'effet POGO selon l'invention ;
- la figure 3A est une représentation schématique en coupe du système correcteur d'effet POGO selon un mode de réalisation de l'invention ;
- les figures 3B et 3C sont des sections selon le plan P de la figure 3A représentant deux variantes de positionnement du réservoir par rapport à la partie de conduite d'alimentation ;
- la figure 4A est une représentation schématique en coupe du système correcteur d'effet POGO selon un autre mode de réalisation de l'invention ;
- les figures 4B et 4C sont des sections selon B-B de la figure 4A représentant deux variantes de positionnement du réservoir par rapport à la partie de conduite d'alimentation ;
- la figure 5 est une représentation en perspective, vue depuis l'amont de la conduite d'alimentation, d'une architecture d'un autre mode de réalisation de l'invention ;
- la figure 6 est une vue en coupe de la figure 5 ;
- la figure 7 représente un détail de la figure 6 selon une variante de l'invention ;
- la figure 8 représente un autre détail de la figure 6 selon une autre variante de l'invention ;
- les figures 9A et 9B sont des schémas de principe permettant d'expliquer le rôle des parois de compartimentage d'un mode de réalisation de l'invention ;
- les figures 10A à 10C sont des sections selon B-B de la figure 4A représentant plusieurs configurations possibles pour les parois de compartimentage;
- la figure 11 est une autre section selon B-B de la figure 4A représentant une autre configuration possible pour les parois de compartimentage.

### Description détaillée de l'invention

La figure 2 représente très schématiquement un véhicule spatial 1, tel qu'un étage de lanceur spatial. Le véhicule 1 comprend un moteur-fusée à propergol liquide 2. Le moteur-fusée 2 comprend une chambre de propulsion 2A intégrant une chambre de combustion et une tuyère convergente-divergente, comme cela est connu.

Le moteur-fusée 2 est alimenté en deux propergols liquides par deux systèmes d'alimentation 3 et 4, comprenant chacun une conduite d'alimentation en propergol 30 et 40. Le premier système d'alimentation 3 n'est représenté que partiellement.

Le deuxième système d'alimentation 4 est pourvu d'un système correcteur POGO capacitif 5, désigné ci-après par « SCP » par commodité.

Dans toute la suite du présent exposé, les termes « amont » et « aval » s'entendront par rapport au SCP 5, en suivant le sens de circulation du propergol liquide vers le moteur-fusée 2.

Le SCP 5 comprend un accumulateur hydraulique 6 et une partie de conduite d'alimentation 4A. La partie de conduite d'alimentation 4A est configurée pour être reliée en amont à une partie amont 41 de la conduite d'alimentation 40, et en aval à une partie aval 42 de la conduite d'alimentation 40. La direction E d'écoulement du propergol liquide est indiquée par une flèche sur les figures. La partie de conduite d'alimentation 4A, la partie amont 41 et la partie aval 42 ont, par exemple, une section circulaire.

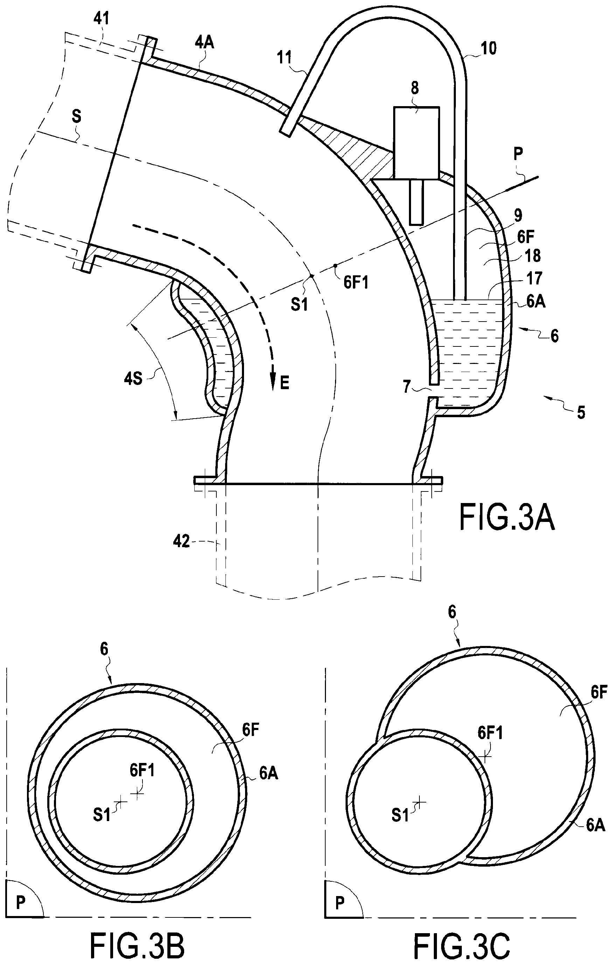

Comme cela est représenté plus en détail sur la figure 3A, l'accumulateur hydraulique 6 comprend un réservoir 6A et un injecteur de gaz 8. Le réservoir 6A est relié à la partie de conduite d'alimentation 4A par au moins un orifice de communication pratiqué dans la paroi de la partie de conduite d'alimentation 4A, par exemple au niveau d'une partie inférieure du réservoir 6A, et généralement désigné par 7. Dans le présent exposé, la partie « supérieure » du réservoir 6A désigne la partie du réservoir où le gaz injecté tend à s'accumuler en raison de sa densité plus faible que celles du propergol liquide circulant dans la conduite, et en raison de l'accélération subie par le SCP 5 lorsque le moteur-fusée 2 fonctionne. À l'inverse, la partie « inférieure » du réservoir désigne la partie du réservoir où le liquide tend à s'accumuler en raison de sa densité plus importante, et en raison de l'accélération subie par le SCP 5 lorsque le moteur-fusée 2 fonctionne.

L'accumulateur hydraulique 6 comprend également un tube plongeur 9. Une tuyauterie 10 relie le réservoir 6A, via le tube plongeur 9, à un tube de rejet 11 débouchant dans la partie de conduite d'alimentation 4A.

Dans un exemple typique, le propergol liquide circulant dans la conduite d'alimentation 40 et la partie de conduite d'alimentation 4A est de l'oxygène liquide (LOx), et le gaz injecté par l'injecteur 8 est de l'hélium (He).

Pendant que le moteur-fusée 2 fonctionne, l'injecteur 8 injecte un débit constant de gaz dans le réservoir 6A, ce qui crée un volume de gaz 18 dans le réservoir, et donc une interface entre le gaz et le propergol liquide (désignée dans la suite par « interface liquide-gaz 17 »). Le gaz est ensuite réinjecté dans la partie de conduite d'alimentation 4A via le tube plongeur 9, la tuyauterie 10, et le tube de rejet 11. Grâce à la présence du volume de gaz 18 dans le réservoir, on peut éviter l'apparition d'oscillations POGO, comme cela est connu, en modifiant les fréquences propres de la conduite d'alimentation.

La présente invention concerne plus particulièrement le positionnement du réservoir 6A par rapport à la conduite d'alimentation 4A, lorsque celle-ci n'est pas rectiligne.

Comme cela est représenté sur les figures 3A à 3C, au moins une portion 4S de la partie de conduite d'alimentation 4A est entourée au moins partiellement par le volume intérieur 6F du réservoir 6A.

Chaque section transversale de la portion 4S (c'est-à-dire une section de la portion 4S perpendiculairement à son axe S) est entourée au moins partiellement par le volume intérieur 6F du réservoir 6A, de sorte que la section transversale correspondante du volume intérieur 6F soit excentrée par rapport à ladite section transversale de la portion 4S.

Par « section transversale correspondante du volume intérieur 6F », on entend la section du volume intérieur 6F prise dans le même plan que la section transversale de la portion 4S. Ces deux sections sont illustrées plus en détail sur la vue en section de la figure 3B. Cette vue en section d'exemple est prise dans un plan de section P, le plan P étant perpendiculaire à l'axe S et coupant l'axe S en un point S1.

Comme on le voit sur la figure 3B, la section transversale correspondante du volume intérieur 6F (c'est-à-dire la section du volume intérieur 6F dans le plan P) est excentrée par rapport à la section de la portion 4S.

Par « excentrée », on entend que le centre 6F1 de la section transversale correspondante du volume intérieur 6F n'est pas confondu avec le point S1, le point S1 étant le centre de la section transversale de la portion 4S.

Dans cette définition, le centre 6F1 de la section transversale correspondante du volume intérieur 6F est défini de la manière suivante :
- si la section transversale correspondante a la forme d'un cercle ou d'un cercle amputé d'une région de forme quelconque, le centre 6F1 est le centre du cercle ;
- si la section transversale correspondante a la forme d'une ellipse ou d'une ellipse amputée d'une région de forme quelconque, le centre 6F1 est le centre de l'ellipse ;
- si la section transversale correspondante a une forme qui n'est ni un cercle, ni un cercle amputé d'une région de forme quelconque, ni une ellipse, ni une ellipse amputée d'une région de forme quelconque, le centre 6F1 est le barycentre de la surface définie par les parois du réservoir 6A (et, éventuellement, de la portion 4S) qui déterminent la section transversale correspondante du réservoir.

Une autre définition de « excentrée » est donnée ci-après. Pour chaque section transversale de la portion 4S, on peut définir un diamètre de cette section transversale qui sépare le plan P en deux demi-plans de telle sorte que, dans chaque demi-plan, se trouve une moitié de la section transversale correspondante du réservoir. La section transversale correspondante est excentrée lorsque l'aire d'une des moitiés de la section transversale correspondante est strictement supérieure à l'autre.

Le fait que le volume intérieur 6F du réservoir 6A soit excentré selon les définitions qui viennent d'être données permet de ménager un espace suffisant pour l'assemblage de la partie de conduite d'alimentation 4A. En particulier, lorsque l'assemblage de la partie de conduite d'alimentation 4A est réalisé à l'aide d'une bride et de vis, la position excentrée du volume intérieur 6F permet de ménager un espace suffisant pour le passage des vis. Ainsi, il n'est pas nécessaire de rajouter un tronçon rectiligne de conduite d'alimentation en amont du réservoir 6A, contrairement aux architectures de l'art antérieur.

La section transversale correspondante du volume intérieur 6F peut englober partiellement (vue en section de la figure 3C) ou totalement (vue en section de la figure 3B) la section transversale de la portion 4S. Les avantages procurés pour l'assemblage sont les mêmes dans les deux cas de figure.

Dans un mode de réalisation particulier de l'invention, la partie de conduite d'alimentation 4A présente une portion rectiligne 4R d'axe A et s'étendant jusqu'à l'extrémité aval de la partie de conduite d'alimentation 4A, c'est-à-dire jusqu'à la jonction entre la partie de conduite d'alimentation 4A et la partie aval 42 de la conduite d'alimentation 40.La portion non rectiligne de la partie de conduite d'alimentation 4A est désignée par 4Q.

La portion rectiligne 4R peut ou non être confondue avec la portion 4S discutée précédemment. En d'autres termes, le volume intérieur 6F du réservoir peut ou non entourer, comme cela a été discuté précédemment, la partie de conduite d'alimentation 4A uniquement sur la portion rectiligne 4R. On notera que, là où la portion 4S et la portion rectiligne 4R coïncident, les axes A et S sont confondus.

Le au moins un orifice de communication 7 peut par exemple être aménagé dans la portion rectiligne 4R.

Le réservoir 6A peut également comprendre une portion linéaire (c'est-à-dire une portion dont le volume intérieur est un cylindre de section quelconque et d'axe longitudinal A') 6R. On notera que l'axe longitudinal A' passe par chaque centre 6F1 de chacune des sections transversales correspondantes discutées précédemment.

Par exemple, les axes A et A' sont parallèles.

La portion linéaire 6R peut constituer la totalité du réservoir 6A, ou seulement sa partie inférieure, selon l'environnement extérieur du SCP 5.

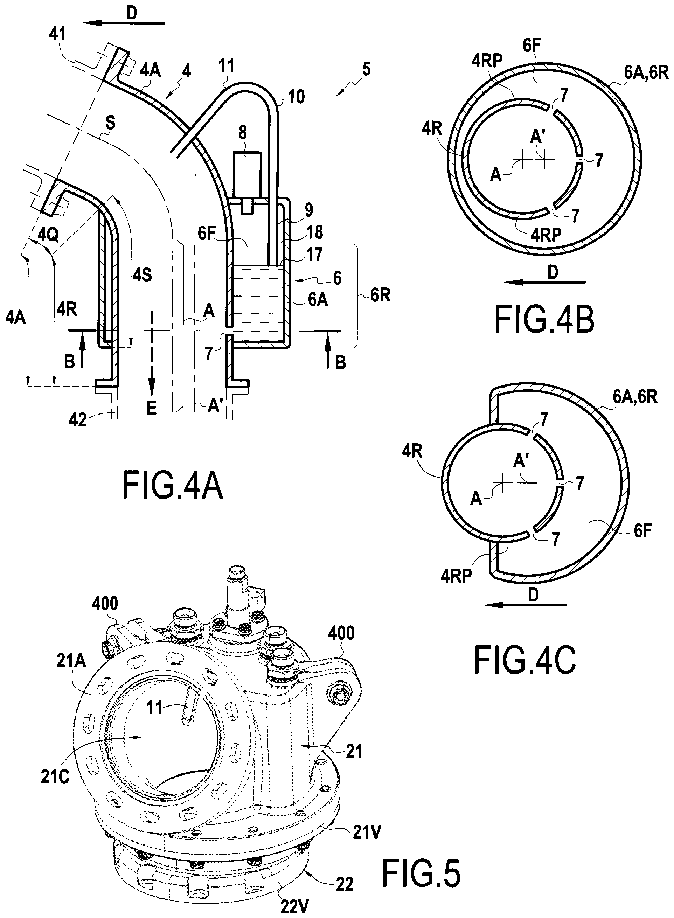

Une configuration comprenant une portion linéaire de réservoir 6R et une portion rectiligne 4R est illustrée sur les figures 4A à 4C.

En accord avec le principe général de l'invention qui a été exposé précédemment, dans chaque section transversale perpendiculairement à l'axe A, la section transversale correspondante du volume intérieur de la portion linéaire 6R entoure partiellement (vue en section de la figure 4C) ou totalement (vue en section de la figure 4B) la portion rectiligne 4R. De plus, la section transversale correspondante du volume intérieur de la portion linéaire 6R est excentrée par rapport à la section de la portion rectiligne 4R, de sorte que les deux axes A et A' ne sont pas confondus.

Comme cela a été expliqué précédemment, cette position excentrée permet de dégager un espace suffisant pour assembler le SCP 5 avec la partie amont 41 de la conduite d'alimentation 40, de sorte qu'il n'est pas nécessaire de rajouter un tronçon rectiligne supplémentaire de la conduite d'alimentation en amont du réservoir 6A.

Cette disposition est plus particulièrement utile lorsque la partie de conduite d'alimentation 4A présente un coude.

Plus précisément, comme cela est représenté sur la figure 4A, la portion non rectiligne 4Q est coudée, c'est-à-dire que, en remontant le long de la conduite d'alimentation depuis l'aval vers l'amont, la portion non rectiligne 4Q s'éloigne de l'axe A de la portion rectiligne 4R dans une direction déterminée D, ci-après appelée « direction de coude D ». Dans la suite du présent exposé, on dira, de manière équivalente à cette définition, que la partie de conduite d'alimentation 4A est coudée dans la direction de coude D.

Dans ce cas, on prévoit que l'axe A' est décalé par rapport à l'axe A vers une direction opposée ou sensiblement opposée à la direction de coude D. De cette manière, lorsqu'on souhaite assembler la portion coudée 4Q de la conduite d'alimentation 4A à la partie amont 41 de la conduite d'alimentation 40 (en pointillés sur la figure 4A), il existe un espace suffisant pour effectuer l'assemblage. En particulier, lorsque l'assemblage est réalisé à l'aide d'une bride et de vis (représentées en trait interrompu sur la figure 4A), il existe un espace suffisant entre le réservoir 6A et l'extrémité amont de la portion coudée 4Q pour permettre le passage des vis.

Afin de conserver un comportement hydraulique satisfaisant du au moins un orifice de communication 7, et donc un fonctionnement satisfaisant du SCP 5, on réalise le au moins un orifice de communication 7 sur le demi-périmètre 4RP de la portion rectiligne 4R situé du côté opposé à la direction de coude D (voir les figures 4B et 4C). Ainsi, la distance entre le au moins un orifice de communication 7 et la paroi intérieure du réservoir est maintenue suffisante pour permettre un comportement hydraulique satisfaisant. De plus, lorsqu'une pluralité d'orifices de communication 7 est pratiquée dans la paroi, la distance entre les orifices de communication 7 est maintenue suffisante pour que chacun des orifices 7 ait un comportement hydraulique similaire, par exemple en termes de pertes de charge.

Le réservoir 6A peut avoir une forme arbitraire quelconque, afin d'adapter le SCP 5 à son environnement au sein du véhicule 1, qui peut être encombré par d'autres modules ou éléments structurels.

Dans un cas particulier, la portion linéaire 6R a une section sensiblement elliptique, et la plus grande distance entre la paroi intérieure du réservoir et la paroi extérieure de la partie de conduite d'alimentation 4A est située du côté du demi-périmètre 4RP. Dans ce cas, selon les positions relatives de la partie de conduite d'alimentation 4A et du réservoir 6A, la section transversale correspondante du volume intérieur de la portion linéaire 6R a alors la forme d'un croissant de lune ou d'une ellipse amputée d'une région sensiblement circulaire.

Ainsi, le comportement hydraulique du SCP 5 demeure satisfaisant et identique à celui des SCP connus qui ont été discutés au début du présent exposé. On notera que, puisque la longueur d'onde des oscillations POGO est très supérieure au diamètre de la partie de conduite d'alimentation 4A, le champ de pression appliqué via la partie de conduite d'alimentation 4A est uniforme, si bien qu'il n'est pas désavantageux, du point de vue du fonctionnement du SCP 5, de ne prévoir le au moins un orifice de communication 7 que sur le demi-périmètre 4RP.

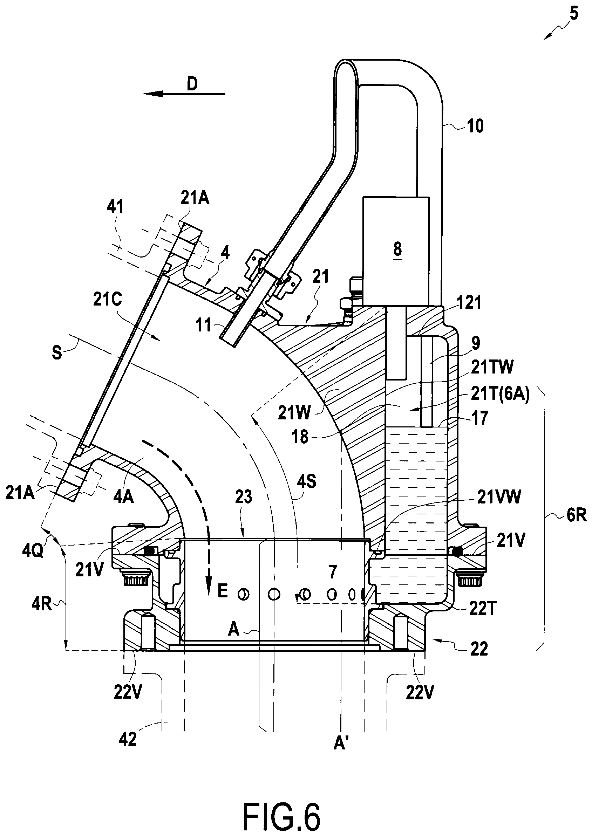

Dans la suite, on va décrire, à l'aide des figures 5 et 6, un exemple de structure permettant de réaliser l'architecture décrite précédemment, avec un nombre limité de pièces à assembler. Cette structure comprend une pièce coudée 21, une pièce de base 22 et une pièce de communication 23.

La pièce coudée 21, comme cela est mieux visible sur la vue en coupe de la figure 6, est constituée de manière à délimiter un volume de conduite 21C et un volume de réservoir 21T qui sont disjoints, c'est-à-dire qu'ils sont séparés l'un de l'autre par un élément de séparation interne 21W. Par « disjoints », on entend qu'un fluide ne peut pas passer depuis le volume de conduite 21C vers le volume de réservoir 21T, ou vice-versa, sans quitter l'enveloppe de la pièce coudée 21.

Le volume de conduite 21C est formée de manière à constituer la portion coudée 4Q de la partie de conduite d'alimentation 4A, comme cela a été décrit ci-dessus. Bien entendu, le tube de rejet 11 débouche dans la partie amont du volume de conduite 21C. L'extrémité amont 21A du volume de conduite 21C est conçue de manière à pouvoir être fixée à la partie amont 41 de la conduite d'alimentation 40, représentée schématiquement en trait interrompu sur la figure 6, par exemple à l'aide d'une bride et de vis.

Le volume de réservoir 21T est constitué de manière à constituer la partie supérieure du réservoir 6A contenant le tube plongeur 9 et au moins une partie du volume de gaz 18. Lorsque ces termes sont utilisés en rapport avec le réservoir, les termes « inférieure » et « supérieure » ont la même signification que celle donnée précédemment.

Comme on l'a dit précédemment, puisque le volume de réservoir 21T est décalé dans une direction opposée à la direction de coude D, un espace suffisant est préservé pour procéder à l'assemblage, et notamment pour laisser passer des vis (en trait interrompu sur la figure 6).

La pièce de base 22 est formée de manière à pouvoir être fixée à l'extrémité aval 21V de la pièce coudée 21. On remarque sur la figure 6 qu'une partie décentrée 22T de la pièce de base 22 vient s'assembler à l'extrémité inférieure de la partie de la pièce coudée 21 constituant le volume de réservoir 21T, de manière à constituer la partie du réservoir 6A la plus proche du au moins un orifice de communication 7, et donc à fermer l'extrémité inférieure du réservoir 6A.

On notera que la portion linéaire 6R du réservoir peut être formée exclusivement par le volume délimité par la partie décentrée 22T, ou par ce même volume augmenté d'une partie inférieure du volume de réservoir 21T.

Encore plus en aval de l'extrémité aval 21V, la pièce de base 22 présente une extrémité aval 22V conçue de manière à pouvoir être fixée à la partie aval 42 de la conduite d'alimentation 40, représentée schématiquement en trait interrompu sur la figure 6.

De préférence, la fixation entre la pièce de base 22 et la pièce coudée 21 se fait à l'aide d'une bride circulaire. Ainsi, on évite ainsi d'avoir recours à des brides non circulaires, plus complexes et coûteuses, pour réaliser l'assemblage. D'autre part, lorsque le propergol est de l'oxygène liquide ou plus généralement un propergol cryogénique, il est possible d'utiliser un joint cryogénique circulaire connu pour assurer l'étanchéité entre la pièce de base et la pièce coudée, au lieu d'un joint cryogénique non circulaire, qui est considérablement plus coûteux, nécessite un développement spécifique et peut être moins fiable.

Toutefois, cette fixation peut aussi être réalisée par soudure. Dans ce cas, il est aussi préférable que l'interface entre les pièces 21 et 22 soit circulaire, car dans ce cas, l'assemblage des pièces est simplifié, et on peut facilement contrôler la soudure sur tout son pourtour entre les pièces 21 et 22.

Une pièce de communication 23 est en outre prévue de telle sorte qu'elle puisse s'insérer dans le volume intérieur délimité par la pièce de base 22 et la pièce coudée 21 lorsqu'elles sont en position assemblée. La pièce de communication 23 a généralement la forme d'un manchon et vient s'insérer dans ce volume intérieur de manière à prolonger la conduite d'alimentation depuis l'extrémité aval 21V de la pièce coudée 21 jusqu'à l'extrémité aval 22V de la pièce coudée 22. On notera que, à cet effet, la pièce de communication 23 est non seulement fixée à l'extrémité aval 21V, mais aussi à l'extrémité aval 21VW de l'élément de séparation 21W, comme cela est mieux visible sur la figure 6.

La pièce de communication 23 peut par exemple former la totalité de la portion rectiligne pré-citée 4R de la conduite d'alimentation 4A.On peut aussi prévoir qu'une partie aval du volume de conduite 21C soit également rectiligne, de manière à prolonger vers l'amont la portion rectiligne 4R.

Selon une possibilité, le volume de conduite 21C et la pièce de communication 23 ont une section circulaire de même diamètre. De cette manière, la fixation entre la pièce de communication 23 et la pièce coudée 21 peut s'effectuer à l'aide d'une bride circulaire. Toutefois, on peut également prévoir d'autres sections, pourvu que l'étanchéité soit assurée.

Dans cette structure, le au moins un orifice de communication 7 est aménagé dans la paroi de la pièce de communication 23. On peut alors disposer le au moins un orifice de communication 7 sur le demi-périmètre de la pièce de communication 23 situé du côté opposé à la direction de coude D, comme cela a été discuté ci-dessus, avec les mêmes avantages.

On notera en outre que, avec cette structure, il est aisé de modifier l'agencement du au moins un orifice de communication 7, simplement en remplaçant la pièce de communication 23 par une version modifiée, si on désire modifier les caractéristiques hydrauliques du SCP 5. Ceci améliore le caractère modulable du SCP 5.

Dans une variante, on peut prévoir que la pièce de communication 23 soit formée venue de matière avec l'une ou l'autre des pièces 21 ou 22, de sorte que les deux pièces ainsi associées soient d'un seul tenant. Ceci peut permettre de réduire le coût total de la structure et de simplifier l'assemblage.

Le au moins un orifice de communication 7 peut être réalisé par électroérosion de la pièce de communication 23.

On notera que chacune des trois pièces qui viennent d'être décrites peuvent être réalisées par usinage, sans avoir recours à des soudures.

Dans la variante représentée sur la figure 6, la surface côté réservoir 21TW de l'élément de séparation 21W est sensiblement parallèle à l'axe A', de sorte que l'épaisseur de l'élément de séparation 21W augmente en remontant vers l'amont.

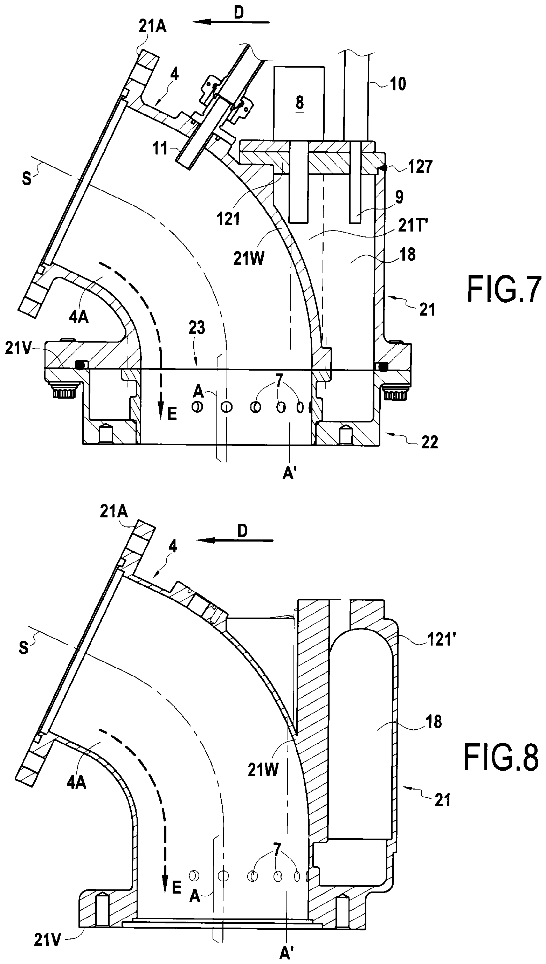

Dans un autre exemple, on prévoit qu'au moins une partie de l'élément de séparation 21W soit d'épaisseur sensiblement constante, de sorte que la surface côté réservoir 21TW suive la courbure de la conduite d'alimentation. Comme cela est représenté sur la figure 7, on dégage ainsi un espace supplémentaire 21T' dans la partie du volume de réservoir 21T contenant le volume de gaz 18. Ceci permet d'élargir la plage de fonctionnement du SCP 5, qui est définie par la plage de volume de gaz pouvant être contenu dans le réservoir, sans augmenter l'encombrement du SCP 5.

Pour réaliser cette augmentation de volume, on peut prévoir que la paroi supérieure 121 du volume de réservoir 21 soit constituée d'un capot soudé à la paroi extérieure (c'est-à-dire la plus éloignée de la direction de coude D) du volume de réservoir 21T. La position de la soudure 127 est indiquée sur la figure 7.

Pour faciliter l'usinage des pièces 21 et 22, on peut choisir de donner à la paroi extérieure du réservoir 6A une forme généralement circulaire ou elliptique.

En alternative aux modes de réalisation par usinage (éventuellement complété par des soudures) qui viennent d'être décrits, on peut également réaliser les pièces 21, 22 et 23 individuellement ou d'un seul tenant par fabrication additive, selon des méthodes connues, par exemple par fusion sélective par laser (Selective Laser Melting ou SLM en anglais), ou par des méthodes dérivées.

Avec une telle fabrication, on peut facilement donner à la paroi extérieure du réservoir une forme arbitraire quelconque, qu'il serait extrêmement difficile ou impossible d'obtenir par usinage. Une telle forme complexe est avantageuse pour adapter le SCP à son environnement au sein du véhicule 1, qui peut être encombré par d'autres modules ou éléments structurels.

On notera que, pour permettre la réalisation par fabrication additive du volume de réservoir 21T, sa partie supérieure 121' est formée en voûte, comme cela est illustré sur la vue de détail de la figure 8. Ceci réduit quelque peu, mais de manière peu significative, le volume intérieur du réservoir.

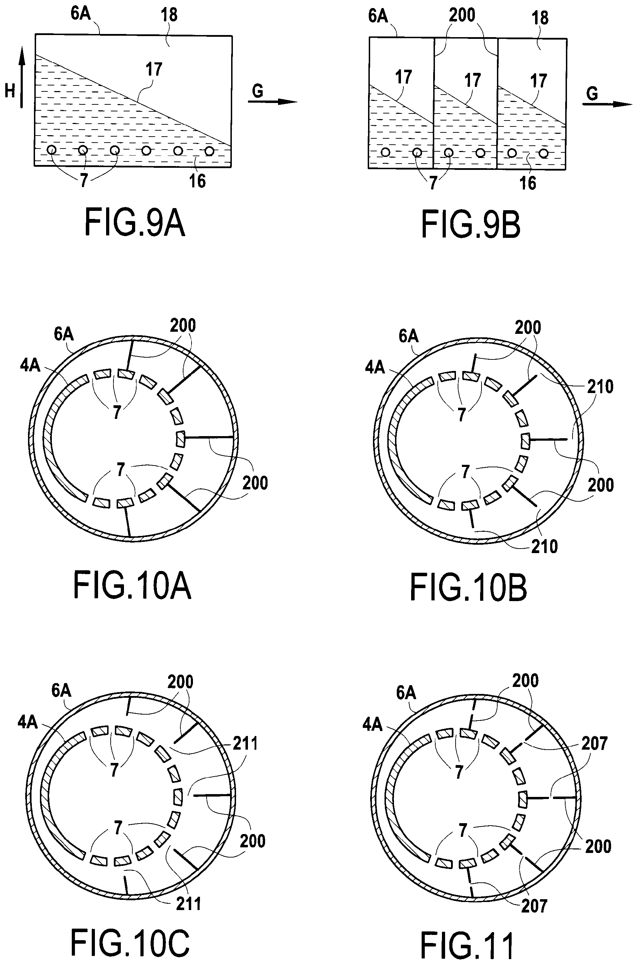

Dans la suite, on va décrire, à l'aide des figures 9A à 11, une solution permettant de limiter ou d'empêcher l'apparition de dysfonctionnements par déjaugeage du SCP, lorsque celui-ci est soumis à une accélération latérale.

En effet, comme cela est bien connu, lorsqu'un récipient quelconque contenant un liquide 16 et un gaz 18 est soumis à une accélération latérale G, le liquide tend à s'accumuler d'un côté du récipient. Par conséquent, l'interface liquide-gaz 17 tend à se déplacer et acquiert une dénivellation H (comme représenté schématiquement sur la figure 9A), qui est une fonction de l'accélération G et des dimensions du volume intérieur du récipient.

Dans le cas d'un SCP installé dans un étage de lanceur, une telle accélération latérale peut se produire pendant plusieurs phases du vol, et notamment lorsque le lanceur bascule après sa phase initiale de départ à la verticale. Si, pendant une telle phase d'accélération latérale, l'interface gaz-liquide 17 atteint, même localement, le au moins un orifice de communication 7 (phénomène dit de « déjaugeage »), la communication fluide entre la partie de conduite d'alimentation 4A et le réservoir 6A est perturbée, et un dysfonctionnement du SCP 5 se produit. Pour empêcher un tel dysfonctionnement, il est donc indispensable de préserver une hauteur minimale de liquide 16 dans le réservoir, autrement dit, d'empêcher l'interface gaz-liquide 17 d'atteindre, même localement, le au moins un orifice de communication 7.

Or, les inventeurs ont reconnu que, pour une accélération latérale donnée, le risque de déjaugeage du SCP est d'autant plus faible que les dimensions intérieures du réservoir sont faibles.

Plus précisément, lorsqu'on considère le réservoir pris dans son ensemble, le phénomène de déjaugeage est plus susceptible de se produire dans la région du réservoir la plus éloignée de la région où le liquide tend à s'accumuler en raison de l'accélération latérale.

C'est pourquoi, afin de limiter l'apparition de déjaugeages, la présente invention propose de prévoir, à l'intérieur du réservoir, au moins une paroi de compartimentage 200 parallèle à l'axe A' de la portion linéaire du réservoir 6A, lorsque le réservoir comprend une pluralité d'orifices de communication 7. La au moins une paroi de compartimentage 200 compartimente le réservoir 6A en plusieurs sous-volumes, comme cela est illustré sur les figures 10A à 10C. En d'autres termes, la au moins une paroi de compartimentage 200 compartimente le liquide et le gaz contenus dans le réservoir 6A, de sorte que chaque sous-volume soit relié à la partie de conduite d'alimentation 4A par un ou plusieurs orifices de communication 7.

Dans la suite du présent exposé, et par commodité, on dira « les parois de compartimentage 200 » pour désigner « au moins une paroi de compartimentage 200 ».

Ainsi, comme cela est illustré sur le schéma de principe de la figure 9B, puisque les sous-volumes compartimentés par les parois 200 ont des dimensions intérieures plus faibles que les dimensions intérieures du réservoir considéré dans son ensemble, le risque de déjaugeage est limité.

Les figures 10A à 10C présentent différentes configurations possibles pour les parois de compartimentage 200.

Dans la configuration illustrée sur la figure 10A, les parois de compartimentage 200 s'étendent radialement depuis la paroi extérieure de la partie de conduite d'alimentation 4A jusqu'à la paroi intérieure du réservoir 6A. On notera que les sous-volumes ainsi délimités ne sont en communication fluide entre eux que si les parois de compartimentage 200 ne s'étendent pas sur toute la hauteur du réservoir 6A. Dans le présent contexte, on entend par « hauteur » la dimension intérieure du réservoir 6A parallèlement à l'axe A'.

Dans la configuration illustrée sur la figure 10B, les parois de compartimentage 200 s'étendent radialement depuis la paroi extérieure de la partie de conduite d'alimentation 4A en direction de la paroi intérieure du réservoir, de sorte qu'une extrémité distale des parois soit en regard avec la paroi intérieure 6A, et qu'un espace de communication fluide 210 soit préservé entre cette extrémité distale et cette paroi intérieure.

Dans la configuration illustrée sur la figure 10C, les parois de compartimentage 200 s'étendent radialement depuis la paroi intérieure du réservoir en direction de la paroi extérieure de la partie de conduite d'alimentation 4A, de sorte qu'une extrémité distale des parois soit en regard avec la paroi extérieure de la partie de conduite d'alimentation 4A, et qu'un espace de communication fluide 211 soit préservé entre cette extrémité distale et cette paroi extérieure.

On peut également prévoir, en combinaison avec n'importe laquelle des configurations qui viennent d'être décrites, de prévoir des orifices de communication supplémentaires 207 sur les parois de compartimentage 200, comme cela est illustré sur la figure 11.

Les espaces de communication fluide 210, 211 et/ou les orifices de communication supplémentaires 207 permettent de mettre les sous-volumes délimités par la au moins une paroi de compartimentage 200 en communication fluide entre eux.

On notera qu'il est possible de combiner les configurations qui viennent d'être évoquées de diverses manières, sans sortir du cadre de la présente invention. Par exemple, on peut prévoir les espaces de communication fluide 210, 211 et les orifices de communication supplémentaires 207 seulement pour certaines des parois 200.

On notera, d'autre part, que, en l'absence d'orifices de communication supplémentaires 207 ou d'espaces de communication fluide 210, 211, il est nécessaire de prévoir que la hauteur des parois de compartimentage 200 soit inférieure à la hauteur moyenne du liquide dans le réservoir 6A. Dans le présent contexte, l'expression « hauteur moyenne » désigne la hauteur du liquide lorsque le SCP fonctionne à son point de fonctionnement nominal et n'est pas soumis à une accélération latérale. En effet, une communication fluide entre les sous-volumes délimités par les parois de compartimentage 200 est nécessaire pour conserver un fonctionnement normal du SCP en situation d'accélération latérale, même lorsque celui-ci n'est doté que d'un seul tube plongeur 9. En alternative, on peut aussi prévoir un ou plusieurs tubes plongeurs supplémentaires.

Les parois de compartimentage 200 peuvent être réalisées indépendamment puis insérées dans le SCP 5 comprenant les trois pièces 21, 22, 23 décrit ci-dessus. Lorsque ces pièces sont réalisées par fabrication additive, les parois de compartimentage 200 peuvent être réalisées en même temps par la même étape de fabrication additive. De plus, lorsque les parois de compartimentage 200 s'étendent depuis la paroi extérieure de la partie de conduite d'alimentation 4A jusqu'à la paroi intérieure du réservoir 6A (configuration de la figure 10A), celles-ci accroissent la rigidité du système, si bien qu'il est possible de prévoir, sur la pièce coudée 21, des supports ou attaches supplémentaires 400 (illustrées sur la figure 5) pour recevoir des charges extérieures sur la pièce coudée 21.

On notera enfin que l'utilisation des parois de compartimentage 200 n'est pas limitée aux configurations du SCP du présent exposé et est également compatible avec les SCP de l'art antérieur discutés au début du présent exposé, avec les mêmes avantages.

Quoique la présente invention ait été décrite en se référant à des exemples de réalisation spécifiques, il est évident que des modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Système correcteur d'effet POGO (5) pour un système d'alimentation (3) d'un moteur-fusée (2) en propergol liquide, comprenant :
une partie de conduite d'alimentation (4A) en propergol liquide configurée pour être reliée en amont et en aval à une conduite d'alimentation en propergol liquide du système d'alimentation (3); et
un accumulateur hydraulique (6), comprenant un réservoir (6A) relié à la partie de conduite d'alimentation (4A) par au moins un orifice de communication (7) ; **caractérisé en ce que** :
au moins une portion (4S) de la partie de conduite d'alimentation (4A) est entourée au moins partiellement par le volume intérieur (6F) du réservoir (6A),
chaque section transversale de ladite portion (4S) par rapport à son axe central (S) étant entourée au moins partiellement par la section transversale correspondante du volume intérieur (6F) du réservoir, de sorte que la section transversale correspondante du volume intérieur du réservoir soit excentrée par rapport à ladite section transversale de ladite portion (4S).

2. Système correcteur d'effet POGO selon la revendication 1, dans lequel la partie de conduite d'alimentation (4A) comprend une portion rectiligne (4R) s'étendant jusqu'à l'extrémité aval de la partie de conduite d'alimentation.

3. Système correcteur d'effet POGO selon la revendication 2, dans lequel le au moins un orifice de communication (7) est aménagé dans la portion rectiligne (4R) de la partie de conduite d'alimentation.

4. Système correcteur d'effet POGO selon la revendication 2 ou 3, dans lequel le réservoir comprend une portion linéaire (6R) entourant au moins partiellement la portion rectiligne (4R) de la partie de conduite d'alimentation (4A), et présentant un axe longitudinal (A') passant par le centre de chaque section transversale du volume intérieur (6F) de la portion linéaire (6R).

5. Système correcteur d'effet POGO selon la revendication 4, dans lequel l'axe longitudinal (A') de la portion linéaire (6R) du réservoir est parallèle à l'axe (A) de la portion rectiligne (4R) de la partie de conduite d'alimentation (4A).

6. Système correcteur d'effet POGO selon la revendication 5, dans lequel la partie de conduite d'alimentation (4A) est coudée dans une direction de coude (D), et l'axe longitudinal (A') de la portion linéaire (6R) du réservoir (6A) est décalé par rapport à l'axe (A) de la portion rectiligne (4R) de la partie de conduite d'alimentation (4A) dans une direction opposée à la direction de coude (D).

7. Système correcteur d'effet POGO selon la revendication 6, dans lequel le au moins un orifice de communication (7) est aménagé sur le demi-périmètre (4RP) de la partie de conduite d'alimentation (4A) situé du côté opposé à la direction de coude (D).

8. Système correcteur d'effet POGO selon la revendication 6 ou 7, comportant :
une pièce coudée (21) délimitant un volume de conduite (21C) et un volume de réservoir (21T) disjoints ;
une pièce de base (22) fixée à la pièce coudée (21) ; et
une pièce de communication (23), formant un manchon comprenant le au moins un orifice de communication dans sa paroi, et étant fixée à la pièce de base (21) et à la pièce coudée (22) de manière à être insérée dans un volume délimité par la pièce de base et la pièce coudée,
la partie de conduite d'alimentation (4A) étant délimitée par les parois du volume de conduite (21C) et, dans sa portion rectiligne (4R), par la pièce de communication (23),
le réservoir (6A) étant délimité par les parois du volume de réservoir (21T), de la pièce de communication (23), et de la pièce de base (22).

9. Système correcteur d'effet POGO selon la revendication 8, dans lequel la pièce de base (22) et la pièce coudée (21) sont configurées de manière à pouvoir être fixées l'une à l'autre à l'aide d'une bride circulaire.

10. Système correcteur d'effet POGO selon l'une des revendications 8 ou 9, dans lequel la pièce de base (22), la pièce coudée (21) et la pièce de communication (23) sont réalisées d'un seul tenant par fabrication additive.

11. Système correcteur d'effet POGO selon l'une quelconque des revendications 4 à 10, dans lequel au moins une paroi de compartimentage (200) parallèle à l'axe (A') de la portion linéaire (6R) du réservoir est disposée dans le réservoir (6A), de manière à compartimenter le réservoir en plusieurs sous-volumes, chaque sous-volume étant relié à la partie de conduite d'alimentation (4A) par au moins un orifice de communication (7).

12. Système correcteur d'effet POGO selon la revendication 11, dans lequel la au moins une paroi de compartimentage (200) s'étend radialement à partir de la paroi de la partie de conduite d'alimentation (4A).

13. Système correcteur d'effet POGO selon la revendication 11, dans lequel la au moins une paroi de compartimentage (200) s'étend radialement à partir de la paroi du réservoir (6A).

14. Système correcteur d'effet POGO selon l'une quelconque des revendications 9 à 11, dans lequel un espace de communication fluide (210 ; 211) est prévu entre l'extrémité distale de la au moins une paroi de compartimentage (200) et la paroi en regard du réservoir (6A) ou de la partie de conduite d'alimentation (4A) de manière à mettre les sous-volumes du réservoir en communication fluide.

15. Système correcteur d'effet POGO selon l'une quelconque des revendications 11 à 14, dans lequel des orifices de communication supplémentaires (207) sont prévus dans la au moins une paroi de compartimentage (200) de manière à mettre les sous-volumes du réservoir en communication fluide.

## Patentansprüche

1. System zur Korrektur des POGO-Effekts (5) für ein System zur Versorgung (3) eines Raketenmotors (2) mit Flüssigtreibstoff, umfassend:
einen Leitungsabschnitt zur Versorgung (4A) mit Flüssigtreibstoff, der dazu ausgelegt ist, stromaufwärts und stromabwärts mit einer Leitung zur Versorgung mit Flüssigtreibstoff des Versorgungssystems (3) verbunden zu sein, und
einen Hydraulikspeicher (6), umfassend einen Tank (6A), der über mindestens eine Kommunikationsöffnung (7) mit dem Versorgungsleitungsabschnitt (4A) verbunden ist, **dadurch gekennzeichnet, dass**:
mindestens ein Abschnitt (4S) des Versorgungsleitungsabschnitts (4A) zumindest teilweise vom Innenvolumen (6F) des Tanks (6A) umgeben ist,
wobei jeder Querschnitt des Abschnitts (4S) in Bezug auf seine Mittelachse (S) zumindest teilweise von dem entsprechenden Querschnitt des Innenvolumens (6F) des Tanks umgeben ist, sodass der entsprechende Querschnitt des Innenvolumens des Tanks exzentrisch in Bezug auf den Querschnitt des Abschnitts (4S) ist.

2. System zur Korrektur des POGO-Effekts gemäß Anspruch 1, wobei der Versorgungsleitungsabschnitt (4A) einen geraden Abschnitt (4R) umfasst, der sich bis zum stromabwärts gelegenen Ende des Versorgungsleitungsabschnitts erstreckt.

3. System zur Korrektur des POGO-Effekts gemäß Anspruch 2, wobei die mindestens eine Kommunikationsöffnung (7) in dem geraden Abschnitt (4R) des Versorgungsleitungsabschnitts angeordnet ist.

4. System zur Korrektur des POGO-Effekts gemäß Anspruch 2 oder 3, wobei der Tank einen linearen Abschnitt (6R) umfasst, der den geraden Abschnitt (4R) des Versorgungsleitungsabschnitts (4A) zumindest teilweise umgibt und eine Längsachse (A') aufweist, die durch die Mitte jedes Querschnitts des Innenvolumens (6F) des linearen Abschnitts (6R) verläuft.

5. System zur Korrektur des POGO-Effekts gemäß Anspruch 4, wobei die Längsachse (A') des linearen Abschnitts (6R) des Tanks parallel zur Achse (A) des geraden Abschnitts (4R) des Versorgungsleitungsabschnitts (4A) verläuft.

6. System zur Korrektur des POGO-Effekts gemäß Anspruch 5, wobei der Versorgungsleitungsabschnitt (4A) in einer Krümmungsrichtung (D) gekrümmt ist und die Längsachse (A') des linearen Abschnitts (6R) des Tanks (6A) von der Achse (A) des geraden Abschnitts (4R) des Versorgungsleitungsabschnitts (4A) in einer der Krümmungsrichtung (D) entgegengesetzten Richtung versetzt ist.

7. System zur Korrektur des POGO-Effekts gemäß Anspruch 6, bei dem die mindestens eine Kommunikationsöffnung (7) an dem halben Umfang (4RP) des Versorgungsleitungsabschnitts (4A) angeordnet ist, der sich auf der der Krümmungsrichtung (D) gegenüberliegenden Seite befindet.

8. System zur Korrektur des POGO-Effekts gemäß Anspruch 6 oder 7, umfassend:
ein gekrümmtes Teil (21), das ein Leitungsvolumen (21C) und ein Tankvolumen (21T) begrenzt, die voneinander getrennt sind,
ein Basisteil (22), das an dem gekrümmten Teil (21) befestigt ist, und
ein Kommunikationsteil (23), das eine Hülse bildet, die die mindestens eine Kommunikationsöffnung in seiner Wand umfasst, und das an dem Basisteil (21) und dem gekrümmten Teil (22) so befestigt ist, dass es in ein Volumen eingesetzt werden kann, das durch das Basisteil und das gekrümmte Teil begrenzt ist,
wobei der Versorgungsleitungsabschnitt (4A) durch die Wände des Leitungsvolumens (21C) und in seinem geradlinigen Abschnitt (4R) durch das Kommunikationsteil (23) begrenzt ist,
und der Tank (6A) durch die Wände des Tankvolumens (21T), das Kommunikationsteil (23) und das Basisteil (22) begrenzt ist.

9. System zur Korrektur des POGO-Effekts gemäß Anspruch 8, wobei das Basisteil (22) und das gekrümmte Teil (21) so ausgelegt sind, dass sie mittels eines Ringflansches aneinander befestigt werden können.

10. System zur Korrektur des POGO-Effektes gemäß einem der Ansprüche 8 oder 9, wobei das Basisteil (22), das gekrümmte Teil (21) und das Kommunikationsteil (23) durch additive Fertigung in einem Stück hergestellt werden.

11. System zur Korrektur des POGO-Effekts gemäß einem der Ansprüche 4 bis 10, wobei mindestens eine Trennwand (200) parallel zur Achse (A') des linearen Abschnitts (6R) des Tanks in dem Tank (6A) angeordnet ist, um den Tank in mehrere Teilvolumina aufzuteilen, wobei jedes Teilvolumen über mindestens eine Kommunikationsöffnung (7) mit dem Versorgungsleitungsabschnitt (4A) verbunden ist.

12. System zur Korrektur des POGO-Effekts gemäß Anspruch 11, wobei sich die mindestens eine Trennwand (200) radial von der Wand des Versorgungsleitungsabschnitts (4A) erstreckt.

13. System zur Korrektur des POGO-Effekts gemäß Anspruch 11, wobei sich die mindestens eine Trennwand (200) radial von der Wand des Tanks (6A) erstreckt.

14. System zur Korrektur des POGO-Effekts gemäß einem der Ansprüche 9 bis 11, wobei ein Fluid-Kommunikationsraum (210; 211) zwischen dem distalen Ende der mindestens einen Trennwand (200) und der dem Tank (6A) oder dem Versorgungsleitungsabschnitt (4A) zugewandten Wand so vorgesehen ist, dass die Teilvolumina des Tanks in fluidische Verbindung gebracht werden.

15. System zur Korrektur des POGO-Effekts gemäß einem der Ansprüche 11 bis 14, wobei zusätzliche Kommunikationsöffnungen (207) in der mindestens einen Trennwand (200) so vorgesehen sind, dass die Teilvolumina des Tanks in fluidische Verbindung gebracht werden.

## Claims

1. A pogo effect corrector system (5) for a feed system (3) for feeding a rocket engine (2) with liquid propellant, comprising:
a feed pipe part (4A) for feeding liquid propellant that is configured to be connected at the upstream and the downstream thereof to a liquid propellant feed pipe of the feed system (3); and
a hydraulic accumulator (6) comprising a tank (6A) connected to the feed pipe part (4A) via at least one communication orifice (7); the corrector system being **characterized in that**:
at least a portion (4S) of the feed pipe part (4A) is at least partly surrounded by the inner volume (6F) of the tank (6A),
each cross-section of said portion (4S) relative to its central axis (S) being at least partly surrounded by the corresponding cross-section of the inner volume (6F) of the tank, in such a manner that the corresponding cross-section of the inner volume of the tank is off-center relative to said cross-section of said portion (4S) .

2. A pogo effect corrector system according to claim 1, wherein the feed pipe part (4A) comprises a rectilinear portion (4R) extending to the downstream end of the feed pipe part.

3. A pogo effect corrector system according to claim 2, wherein the at least one communication orifice (7) is formed in the rectilinear portion (4R) of the feed pipe part.

4. A pogo effect corrector system according to claim 2 or claim 3, wherein the tank includes a linear portion (6R) at least partly surrounding the rectilinear portion (4R) of the feed pipe part (4A), and presenting a longitudinal axis (A') passing via the center of each cross-section of the inner volume (6F) of the linear portion (6R).

5. A pogo effect corrector system according to claim 4, wherein the longitudinal axis (A') of the linear portion (6R) of the tank is parallel to the axis (A) of the rectilinear portion (4R) of the feed pipe part (4A).

6. A pogo effect corrector system according to claim 5, wherein the feed pipe part (4A) is bent in a bend direction (D), and the longitudinal axis (A') of the linear portion (6R) of the tank (6A) is offset relative to the axis (A) of the rectilinear portion (4R) of the feed pipe part (4A) in a direction opposite to the bend direction (D).

7. A pogo effect corrector system according to claim 6, wherein the at least one communication orifice (7) is formed in the half-perimeter (4RP) of the feed pipe part (4A) situated on the side thereof opposite to the bend direction (D).

8. A pogo effect corrector system according to claim 6 or claim 7, including:
a bent part (21) defining a pipe volume (21C) and a tank volume (21T) that are disjoint;
a base part (22) secured to the bent part (21); and
a communication part (23) forming a sleeve comprising the at least one communication orifice in its wall, and being secured to the base part (21) and to the bent part (22) in such a manner as to be inserted in a volume defined by the base part and the bent part,
the feed pipe part (4A) being defined by the walls of the pipe volume (21C) and, in its rectilinear portion (4R), by the communication part (23),
the tank (6A) being defined by the walls of the tank volume (21T), of the communication part (23), and of the base part (22).

9. A pogo effect corrector system according to claim 8, wherein the base part (22) and the bent part (21) are configured in such a manner as to be capable of being secured to each other by means of a circular flange.

10. A pogo effect corrector system according to one of claims 8 or 9, wherein the base part (22), the bent part (21), and the communication part (23) are made as a single unit by additive fabrication.

11. A pogo effect corrector system according to any one of claims 4 to 10, wherein at least one compartment wall (200) parallel to the axis (A') of the linear portion (6R) of the tank is arranged in the tank (6A), in such a manner as to subdivide the tank into a plurality of sub-volumes, each sub-volume being connected to the feed pipe part (4A) via at least one communication orifice (7).

12. A pogo effect corrector system according to claim 11, wherein the at least one compartment wall (200) extends radially from the wall of the feed pipe part (4A).

13. A pogo effect corrector system according to claim 11, wherein the at least one compartment wall (200) extends radially from the wall of the tank (6A).

14. A pogo effect corrector system according to any one of claims 9 to 11, wherein a fluid flow communication space (210; 211) is provided between the distal end of the at least one compartment wall (200) and the facing wall of the tank (6A) or of the feed pipe part (4A) in such a manner as to put the sub-volumes of the tank into fluid flow communication.

15. A pogo effect corrector system according to any one of claims 11 to 14, wherein additional communication orifices (207) are provided in the at least one compartment wall (200) so as to put the sub-volumes of the tank into fluid flow communication.
